# EUROPÄISCHE PATENTSCHRIFT

(11) **EP 2 905 588 B1**
(45) Veröffentlichungstag und Bekanntmachung des Hinweises auf die Patenterteilung: **12.01.2022**
(21) Anmeldenummer: 15162082.0
(22) Anmeldetag: 04.11.2011
(51) Int. Cl.: G01G 21/28

(54) **Nahtlose Wagenkörper und Verfahren zur Herstellung**
Seamless scale body and method for producing the same
Corps de balance sans soudure et procédé de fabrication

(30) Priorität: 16.11.2010 DE 102010060606
(43) Veröffentlichungstag der Anmeldung: 12.08.2015
(62) Teilanmeldung aus: 11187979.7
(73) Patentinhaber: Janner, Siegfried, 92708 Mantel (DE)
(72) Erfinder: Janner, Siegfried, 92708 Mantel (DE)
(74) Vertreter: Lang, Christian

(56) Entgegenhaltungen:
- WO-A2-2009/012742
- CN-Y- 201 130 055
- DE-A1- 19 841 025
- US-A- 2 668 045
- US-A- 4 565 255
- US-A- 4 832 142
- US-A1- 2006 207 805
- None

## Beschreibung

### GEBIET DER ERFINDUNG

Die vorliegende Erfindung betrifft eine Tisch- oder Plattformwaage mit einer oberen Rahmenkonstruktion und einer unteren Rahmenkonstruktion, die über eine Wägezelle miteinander verbunden sind, sodass das Gewicht eines Gegenstandes, welcher auf der oberen Rahmenkonstruktion abgelegt ist, bestimmt werden kann. Darüber hinaus betrifft es eine entsprechende Rahmenkonstruktion bzw. einen entsprechenden Waagenkörper für eine Tisch- oder Plattformwaage.

### STAND DER TECHNIK

Tisch- oder Plattformwaagen mit einer oberen oder unteren Rahmenkonstruktion (Waagenkörper), die über eine Wägezelle miteinander verbunden sind, sind aus dem Stand der Technik bereits bekannt.

Derartige Tisch- oder Plattformwaagen sind meist so ausgebildet, dass die obere und untere Rahmenkonstruktion in Form einer rechteckigen Rohrkonstruktion ausgebildet ist, bei dem beispielsweise Vierkantrohre zu einem rechteckigen Rahmen zusammen geschweißt sind. An die rechteckige Vierkantrohrkonstruktion werden dann weitere Bauteile angeordnet, um beispielsweise auch eine entsprechende Verbindung mit einer Wägezelle zu schaffen.

Der Nachteil derartiger Konstruktionen besteht darin, dass sie in der Herstellung relativ aufwendig sind.

Aus der Patentschrift US 4 832 142 A ist eine Waage bekannt, deren Rahmenstruktur aus einer oberen und einer unteren Rahmenkonstruktion bestehen, welche beide einen vollständig umlaufenden Rand aufweisen und durch Prägen hergestellt werden.

Aus der Patentanmeldung US 2006/0207805 A1 ist eine Waage bekannt, welche eine Plattform mit einem oberen und einem unteren Abschnitt, die durch Prägen hergestellt werden, sowie eine Abdeckung umfasst. Zwischen oberem und unterem Abschnitt der Plattform sind Hebel angeordnet, welche auf einen Druckmesser einwirken.

### OFFENBARUNG DER ERFINDUNG

### AUFGABE DER ERFINDUNG

Es ist deshalb Aufgabe der vorliegenden Erfindung eine Tisch- oder Plattformwaage bzw. eine entsprechende Rahmenkonstruktion für eine Tisch- oder Plattformwaage sowie ein Herstellungsverfahren für dieselbe bereitzustellen, bei welchen der Aufwand für die Herstellung reduziert werden kann, sodass eine effektive Herstellung und somit kostengünstige Herstellung erreicht werden kann. Gleichzeitig soll jedoch die Festigkeit und Steifheit, insbesondere die Verwindungssteifheit der entsprechenden Rahmenkonstruktion beibehalten oder verbessert werden, sodass eine hoch präzise messende, zuverlässige sowie ästhetisch ansprechende Tisch- oder Plattformwaage hergestellt werden kann.

### TECHNISCHE LÖSUNG

Diese Aufgabe wird gelöst durch ein Herstellungsverfahren für eine Tisch- oder Plattformwaage mit den Merkmalen des Anspruchs 1 und eine Tisch- oder Plattformwaage mit den Merkmalen des Anspruch 5. Vorteilhafte Ausgestaltungen sind Gegenstand der abhängigen Ansprüche.

Die Erfindung geht aus von der Erkenntnis, dass eine effektivere Herstellung dadurch erreicht werden kann, dass die entsprechenden Rahmenkonstruktionen bzw. -teile für die Tisch- oder Plattformwaagen nicht mehr geschweißt werden, sondern durch einfache Trennvorgänge und Biegevorgänge hergestellt werden. Entsprechend werden die Rahmenkonstruktionen einer Tisch- oder Plattformwaage oder zumindest eine davon, einstückig aus einer monolithischen Platte gefertigt. Eine derartige monolithische Platte kann beispielsweise eine Stahlplatte, insbesondere eine Edelstahlplatte sein, die als homogene, rechteckige Platte als Ausgangsmaterial bereitgestellt wird. Insbesondere kann die Rahmenkonstruktion durch eine homogene Platte gebildet werden, die keine stoffschlüssigen Verbindungen, wie beispielsweise Schweißnähte aufweist. Auch die Rahmenkonstruktion an sich benötigt entsprechend keine stoffschlüssigen Verbindungen, insbesondere Schweißnähte. Die Rahmenkonstruktionen werden hierbei insbesondere durch die Bauteile gebildet, die unmittelbar mit der Wägezelle in Verbindung stehen und gegebenenfalls über weitere Bauteile mit einer Standfläche bzw. dem zu wiegenden Gut in Verbindung stehen. Vorzugsweise können auch sämtliche anderen Bauteile der Tisch- oder Plattformwaage, wie beispielsweise Standfüße, Tischabdeckung und dgl. ohne stoffschlüssige Verbindungen, insbesondere ohne Schweißnähte, an der Waage angeordnet sein.

Die Rahmenkonstruktion kann Ausnehmungen, Öffnungen und abgewinkelte Bereiche umfassen, insbesondere abgewinkelte Bereiche, die um einen Winkel von 90° gegenüber der ursprünglichen Plattenebene abgewinkelt sind.

Die abgewinkelten Bereiche können zumindest teilweise am äußeren Umfangsrand der aus der Platte gebildeten Rahmenkonstruktion und/oder am Rand von Ausnehmungen vorgesehen sein. Die abgewinkelten Bereiche können entsprechend quer, insbesondere senkrecht zur Hauptfläche der Platte angeordnet sein, sodass so genannten Kantenwinkel ausgebildet sind, was bedeutet, dass die Rahmenkonstruktion im Bereich des Randes im Querschnitt die Form eines Winkelprofils aufweist.

Die Hauptfläche der Rahmenkonstruktion bzw. der Platte, aus der die Rahmenkonstruktion gefertigt ist, ist diejenige Fläche, die die größte Fläche darstellt. Bei einer quaderförmigen Platte ist die Hauptfläche somit durch die Längsseite und die Breitseite aufgespannt, welche die größten Dimensionen aufweisen, während die Dickenrichtung die geringste Dimension besitzt.

Die abgewinkelten Bereiche können an gegenüber liegenden Kanten ausgebildet sein und sich in derselben Richtung von der Hauptfläche der Platte erstrecken, um im Querschnitt U-förmige Profile auszubilden, die eine hohe Stabilität und Steifheit der Rahmenkonstruktion gewährleisten.

Die Platte bzw. Rahmenkonstruktion kann in der Draufsicht auf die Hauptfläche eine H-förmige Form aufweisen, wobei der Verbindungssteg zwischen den senkrecht stehenden Teilen des H sich in Richtung der Längsseite der Platte erstreckt.

Um eine einfachere Biegung der abgewinkelten Bereiche zu ermöglichen, kann im Krümmungsbereich, der den abgewinkelten Bereich mit der Hauptfläche verbindet, teilweise mit Öffnungen versehen sein. Dadurch wird die Biegekante geschwächt und es ist ein einfacheres Abwinkeln möglich. Gleichzeitig kann jedoch gewährleistet werden, dass die Eigenschaften hinsichtlich Festigkeit und Stabilität die erforderlichen Werte erreichen.

Die abgewinkelten Bereiche können beim Zusammenbau der Rahmenkonstruktionen zur Tischwaage oder Plattformwaage entsprechend aufeinander zuweisen und sich teilweise überlappen, sodass durch die Rahmenkonstruktionen ein weitgehend abgeschlossenes Gehäuse gebildet werden kann.

### KURZE BESCHREIBUNG DER FIGUREN

Die beigefügten Figuren zeigen in
- Fig. 1: eine Draufsicht auf eine erfindungsgemäße Tischwaage;
- Fig. 2: eine Seitenansicht der Längsseite der Tischwaage aus Fig. 1;
- Fig. 3: eine Schnittansicht durch die Tischwaage aus Fig. 1 entlang der Schnittlinie B;
- Fig. 4: eine Seitenansicht der Schmalseite der Tischwaage aus Fig. 1;
- Fig. 5: eine Schnittansicht der Tischwaage aus Fig. 1 entlang dem Schnitt A;
- Fig. 6: eine Detailansicht aus der Schnittansicht in der Fig. 3;
- Fig. 7: eine perspektivische Darstellung der Tischwaage aus Fig. 1 von der Unterseite;
- Fig. 8: eine Draufsicht auf die Tischwaage der Figuren 1 bis 7 von unten;
- Fig. 9: eine perspektivische Ansicht einer Abdeckung für die Tischwaage aus den Figuren 1 bis 8;
- Fig. 10: eine Draufsicht auf die Abdeckung der Fig. 9;
- Fig. 11: eine Seitenansicht der Längsseite der Abdeckung aus Fig. 9;
- Fig. 12: eine Draufsicht auf die Abdeckung der Fig. 9 von unten;
- Fig. 13: eine Schnittansicht durch die Abdeckung der Fig. 9 gemäß der Schnittlinie A aus Fig. 1
- Fig. 14: eine Draufsicht auf das obere Rahmenteil der Tischwaage aus den Figuren 1 bis 8;
- Fig. 15: eine Seitenansicht des oberen Rahmenteils aus Fig. 14;
- Fig. 16: eine Schnittansicht durch das obere Rahmenteil aus Fig. 14 entlang der Schnittlinie B aus Fig. 1;
- Fig. 17: eine Seitenansicht des oberen Rahmenteils aus Fig. 14 von der Schmalseite;
- Fig. 18: eine Schnittansicht durch das obere Rahmenteil aus Fig. 14 entlang der Schnittlinie A aus Fig. 1;
- Fig. 19: eine Draufsicht auf das untere Rahmenteil der Tischwaage aus den Figuren 1 bis 8;
- Fig. 20: eine Seitenansicht des unteren Rahmenteils aus der Fig. 19 von der Längsseite;
- Fig. 21: eine Schnittansicht durch das untere Rahmenteil aus Fig. 19 entlang der Schnittlinie B aus Fig. 1;
- Fig. 22: eine Seitenansicht des unteren Rahmenteils aus Fig. 19 von der Schmalseite;
- Fig. 23: eine Schnittansicht durch das untere Rahmenteil entlang der Schnittlinie A aus Fig. 1;
- Fig. 24: eine perspektivische Darstellung eines Teils der Tischwaage aus Fig. 1 von unten bei umgedrehter Tischwaage; und in
- Fig. 25: eine perspektivische Darstellung eines Teils der Tischwaage aus Fig. 1 von oben.

### AUSFÜHRUNGSBEISPIEL

Weitere Vorteile, Kennzeichen und Merkmale der vorliegenden Erfindung werden bei der nachfolgenden Beschreibung eines Ausführungsbeispiels anhand der beigefügten Zeichnungen deutlich.

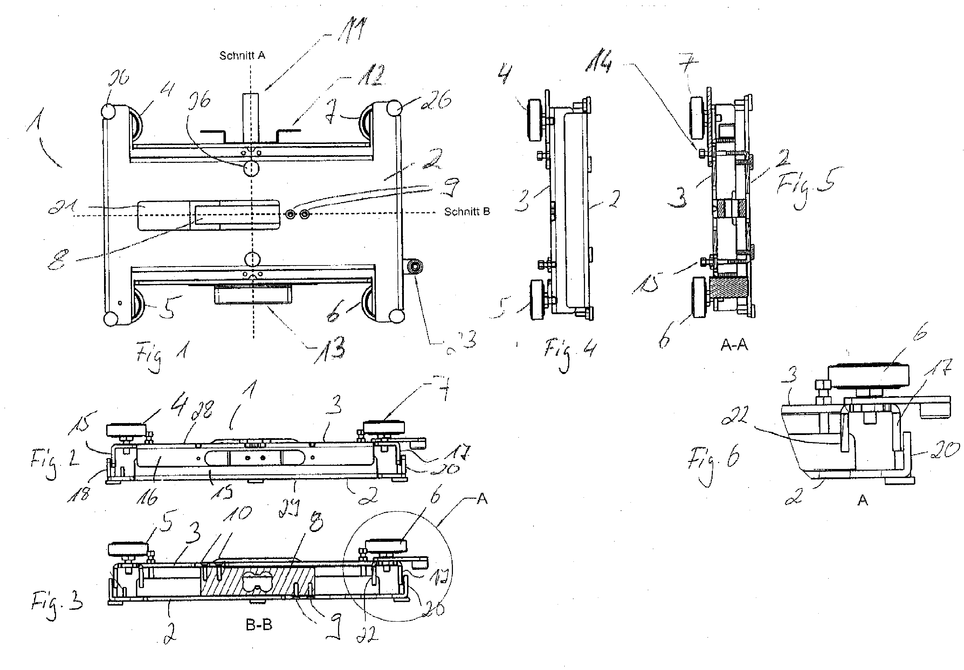

In Fig. 1 ist eine Draufsicht auf eine Tischwaage 1 ohne Tisch bzw. Abdeckung zu sehen, sodass im Wesentlichen die Rahmenkonstruktionen mit oberem und unterem Rahmenteil 2,3 zu erkennen sind.

In der Draufsicht der Fig. 1 ist das obere Rahmenteil 2 zu sehen, welches über eine Wägezelle mit dem unteren Rahmenteil 3 verbunden ist. Das obere Rahmenteil 2 ist über zwei Schrauben 9 an der Wägezelle 8 befestigt, die, wie wiederum in Fig. 3 zu sehen ist, mit zwei Schrauben 10 mit dem unteren Rahmenteil 3 verbunden ist. Die Wägezelle 8 ist durch eine Aussparung 21 in der Platte des oberen Rahmenteils 2 zu erkennen, wobei die Aussparung 21 dazu dient eine Kollision der Platte des oberen Rahmenteils 2 mit der Wägezelle 8 bzw. eine Beeinflussung der Wägezelle 8 durch die Platte des oberen Rahmenteils 2 zu vermeiden.

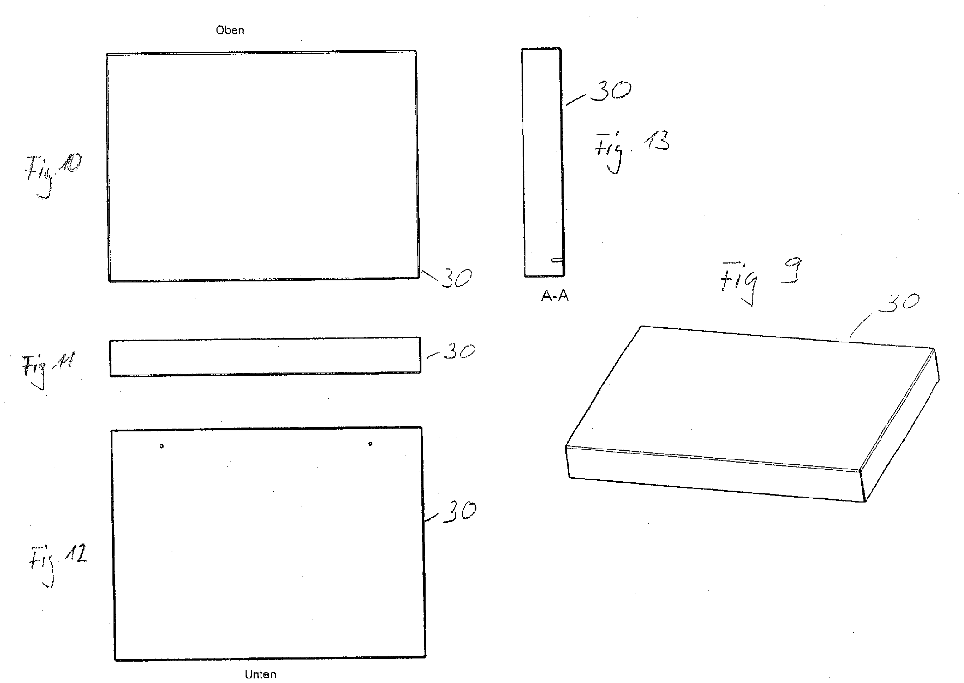

Am oberen Rahmenteil 2 sind Auflager 26 angeordnet, auf denen der Tisch bzw. die Abdeckung 30 (s. Figuren 9 bis 13) der Tischwaage gelagert wird.

In der Draufsicht der Fig. 1 ist zudem ein Teil der Füße 4, 5, 6, 7 zu erkennen, die am unteren Rahmenteil 3 über Schraubverbindungen angeordnet sind.

An der Tischwaage 1 sind des Weiteren zusätzliche Anbauteile vorgesehen, wie beispielsweise eine Halterung 11 für eine Zusatzeinrichtung, eine Kabelhalterung 12 sowie ein Kabelschaltkasten 13 für einen Analog-Digital-Wandler (A/D-Wandler). Darüber hinaus ist an einer Schmalseite bzw. Stirnseite der Rahmenkonstruktionen, genauer gesagt am unteren Rahmenteil 3 eine Libelle 23 angeordnet, die eine waagrechte Aufstellung der Tischwaage 1 ermöglicht.

Die Fig. 2 zeigt die Tischwaage 1 aus Fig. 1 in einer Seitenansicht von der Längsseite. In der Darstellung der Fig. 2 ist die Tischwaage 1 auf den Kopf gestellt, sodass die Füße 4, 7 nach oben zeigen.

Die Fig. 2 zeigt, dass sowohl das obere Rahmenteil 2 als auch das untere Rahmenteil 3 in den Randbereichen entlang des Umfangs abgewinkelte Bereiche 15, 16, 17, 18, 19, 20 aufweisen, die teilweise ineinander greifen und sich überlappen. So umgreift das obere Rahmenteil 2 an den Schmalseiten das untere Rahmenteil 3, während an den Längsseiten das untere Rahmenteil 3 das obere Rahmenteil 2 umgreift.

Die abgewinkelten Bereich 15 bis 20 sind im rechten Winkel zu den Hauptflächen 28 und 29 des unteren Rahmenteils 3 bzw. des oberen Rahmenteils 2 angeordnet.

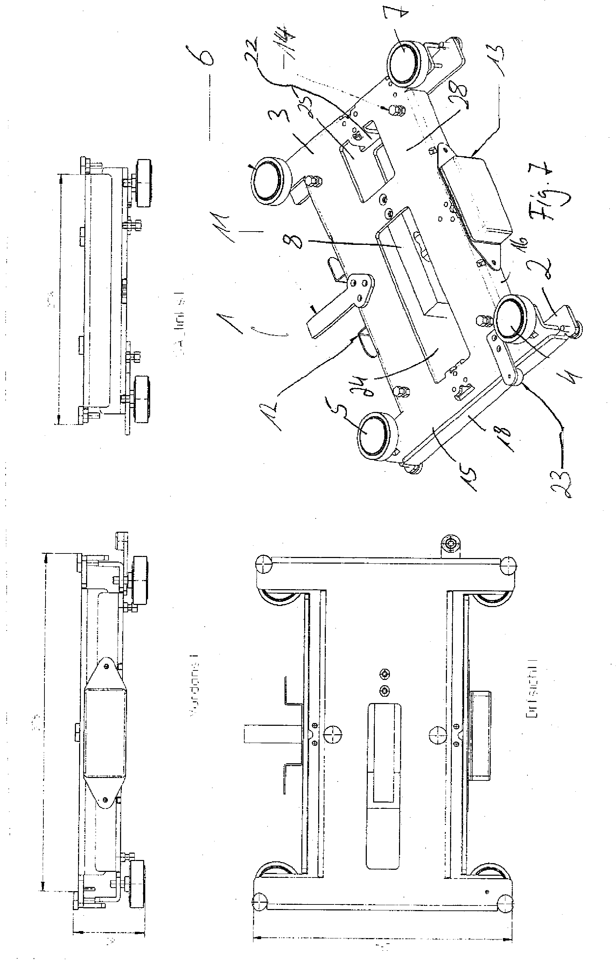

In der Schnittansicht der Fig. 3 ist die Anordnung vom oberen Rahmenteil 2 und unterem Rahmenteil 3 an der Wägezelle 8 detaillierter dargestellt und es ist zu erkennen, dass auch am Rand einer Aussparung im unteren Rahmenteil (s. Fig. 7) ein abgewinkelter Bereich 22 vorgesehen ist, sodass dieser zusammen mit dem abgewinkelten Bereich 17 am äußeren Umfang des unteren Rahmenteils 3 ein U-förmiges Profil ergibt. Dies ist detailliert in der Fig. 6 dargestellt.

Die abgewinkelten Bereiche 15 bis 20, 22 werden durch Biegen der entsprechenden Bereiche aus der Plattenebene des oberen und unteren Rahmenteils 2, 3 gebildet. Hierzu müssen nur entsprechende Schnitte in einer planen Platte ausgeführt werden bzw. entsprechende Aussparungen in der Platte des oberen und unteren Rahmenteils 2, 3 vorgesehen werden, welche beispielsweise durch bekannte mechanische Trennverfahren oder durch Laserschneiden oder dergleichen realisiert werden können.

Die Fig. 7 zeigt die Rahmenkonstruktionen der Tischwaage 1 in einer perspektivischen Darstellung von der Unterseite. Die untere Rahmenkonstruktion in Form des unteren Rahmenteils 3 greift mit den entsprechend abgewinkelten Bereichen 15 in die obere Rahmenkonstruktion in Form des oberen Rahmenteils 2 ein, sodass der abgewinkelte Bereich 18 an der Schmalseite des oberen Rahmenteils 2 den abgewinkelten Bereich 15 des unteren Rahmenteils 3 umgreift. In gleicher Weise umgreift der abgewinkelte Bereich 16 des unteren Rahmenteils 3 den abgewinkelten Bereich des oberen Rahmenteils 2 an der Längsseite (nicht gezeigt).

Neben den Anbauteilen 11, 12, 13, die über Schraubverbindungen an dem unteren Rahmenteil 3 angeordnet sind, befinden sich an dem unteren Rahmenteil 3 insgesamt 4 Stellschrauben 14, welche als Überlastsicherungen dienen, wie in Fig. 5 dargestellt ist. Die Stellschrauben 14 halten das obere Rahmenteil 2 in einem definierten Abstand zum unteren Rahmenteil 3, sodass die Wägezelle 8 nicht überlastet werden kann.

In der perspektivischen Darstellung der Fig. 7 sind auch zwei Aussparungen 24, 25 in der Hauptfläche 28 des unteren Rahmenteils 3 dargestellt, an deren Kanten zumindest teilweise abgewinkelte Bereiche 22 vorgesehen sind. Die Aussparung 24 dient ähnlich der Aussparung 21 des oberen Rahmenteils 2 zur Vermeidung unerwünschter Beeinflussungen der Wägezelle 8.

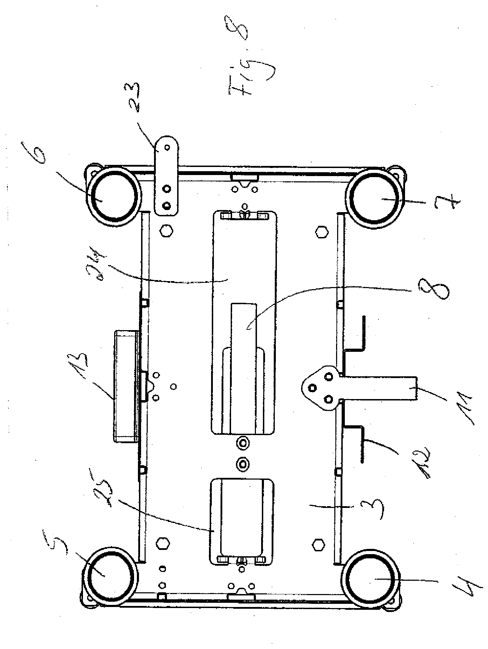

Die Fig. 8 zeigt die Tischwaage 1 mit ihren Rahmenkonstruktionen 2,3 ohne Abdeckung 30 von der Unterseite, während die Figuren 9 bis 10 die Abdeckung 30, die über das obere Rahmenteil 2 gestülpt wird, in den Fig. 9 bis 13 in einer perspektivischen Darstellung (Fig. 9), einer Draufsicht (Fig. 10), einer Seitenansicht (Fig. 11), einer Ansicht von unten (Fig. 12) und einer Schnittansicht (Fig. 13) zeigen.

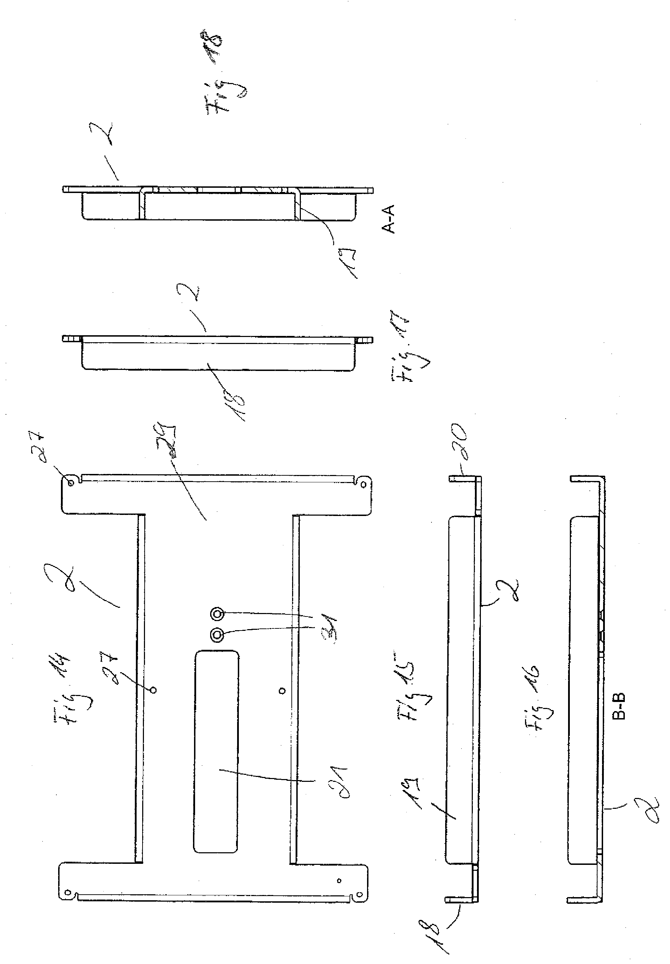

In den Figuren 14 bis 18 ist das obere Rahmenteil 2 in einer entsprechenden Draufsicht (Fig. 14) und Seitenansichten (Fig. 15 und Fig. 17) sowie Schnittansichten (Fig. 16 und Fig. 18) gezeigt. In diesen Darstellungen ist noch einmal deutlich zu erkennen, wie die obere Rahmenkonstruktion in Form des oberen Rahmenteils 2 aus einer ebenen Platte, beispielsweise aus Edelstahl, durch entsprechendes Einbringen von Schnitten und Umkanten entsprechender Bereiche sowie durch Ausbildung von Ausnehmungen und Öffnungen in einfacher Weise hergestellt werden kann.

So wird beispielsweise die Ausnehmung 21 durch einfaches Ausschneiden der entsprechenden Öffnung geschaffen, während die Öffnungen 31 für die Aufnahme der Schraubverbindung zur Verbindung des oberen Rahmenteils mit der Wägezelle 8 sowie die entsprechenden Öffnungen 27 zur Aufnahme der Auflager 26 durch einfaches Bohren eingebracht werden können. Um die abgewinkelten Bereiche 18, 19 und 20 zu bilden, werden zunächst teilweise entsprechende Bereiche aus einer ebenen, rechteckigen Platte ausgeschnitten und zudem entsprechende Schnitte eingebracht, um Bereiche freizuschneiden, die durch einen Biegeprozess zu einem abgewinkelten Bereich gemacht werden sollen. Entsprechend kann eine oberes Rahmenteil, genauso wie nachfolgend ein unteres Rahmenteil ausschließlich durch Trennverfahren, insbesondere mechanische Trennverfahren oder Laserstrahlschneiden oder dergleichen, und Biegeprozesse hergestellt werden, ohne dass es aufwendiger Schweißungen und deren Nachbearbeitung bedarf.

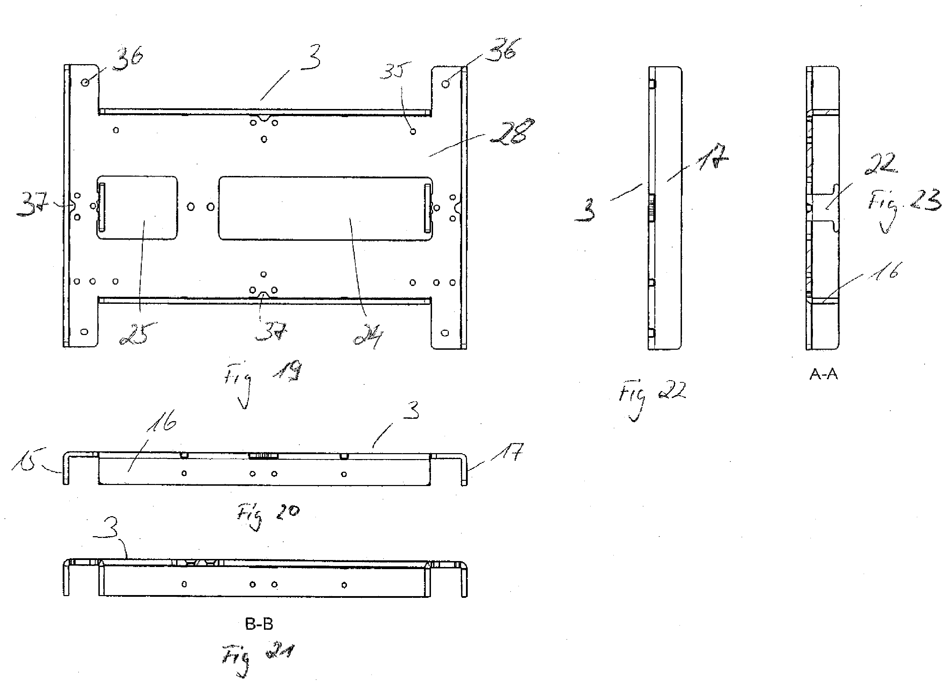

Die Figuren 19 bis 23 zeigen das untere Rahmenteil 3 in einer Draufsicht (Fig. 19), in Seitenansichten (Fig. 20 und Fig. 22) sowie in Schnittansichten entlang der Schnittlinien A und B aus Fig. 1 (Fig. 23 und Fig. 21). Auch hier wird deutlich, dass das untere Rahmenteil 3 in einfacher und effektiver Weise durch reines mechanisches Trennen, Laserstrahltrennen oder dergleichen und entsprechende Biegeprozesse in einfacher Weise hergestellt werden kann. Durch die abgewinkelten Bereiche 15, 16, 17 (s. Fig. 20) wird in gleicher Weise wie beim oberen Rahmenteil 2 eine Versteifung des entsprechenden Rahmenteils 2, 3 bewirkt, sodass das obere und das untere Rahmenteil 2, 3 eine ausreichende Festigkeit, insbesondere Verwindungsfestigkeit aufweisen.

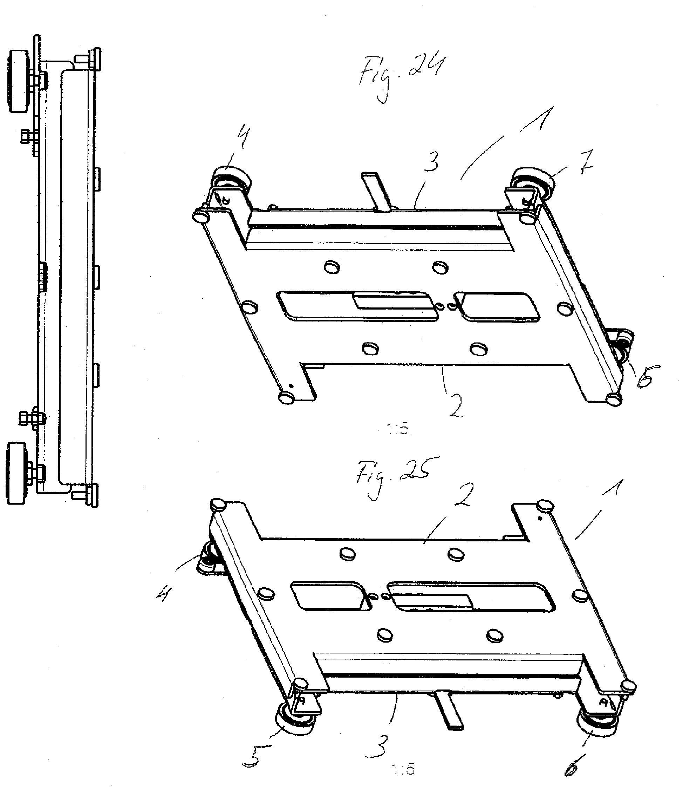

Die Figuren 24 und 25 zeigen die Tischwaage 1 jeweils noch einmal in einer perspektivischen Darstellung, wobei hier wiederum die Abdeckung 30 weggelassen worden ist.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen werden oder andersartige Kombinationen von Merkmalen vorgenommen werden ohne das der Schutzbereich der beigefügten Ansprüche verlassen wird. Die vorliegende Erfindung umfasst insbesondere sämtliche Kombinationen aller Einzelmerkmale, die hier vorgestellt worden sind.

## Patentansprüche

1. Verfahren zur Herstellung einer Tisch- oder Plattformwaage mit einer oberen Rahmenkonstruktion (2) und einer unteren Rahmenkonstruktion (3), die über eine Wägezelle (8) miteinander verbunden sind, wobei die Rahmenkonstruktion durch eine einstückige, monolithische Platte gebildet wird,
**dadurch gekennzeichnet, dass**
die einstückige, monolithische Platte erst in ihrer Form zugeschnitten und mit Schnitten versehen wird, um Bereiche an den Kanten des äußeren Rands der Platte freizuschneiden, und die Bereiche anschließend umgebogen werden, sodass die Rahmenkonstruktion an ihrem äußeren Umfangsrand teilweise abgewinkelte Bereiche aufweist.

2. Verfahren nach Anspruch 1,
**dadurch gekennzeichnete dass**
die Platte durch Laserstrahlschneiden und/oder in einer automatisierten Biegemaschine bearbeitet wird.

3. Verfahren nach einem der vorhergehenden Ansprüche,
**dadurch gekennzeichnet, dass**
die einstückige, monolithische Platte in ihrer Form mit Ausnehmungen und/oder Öffnungen versehen wird und Randbereiche an den Kanten der Ausnehmungen und/oder Öffnungen umgebogen werden,

4. Verfahren nach einem der vorhergehenden Ansprüche,
**dadurch gekennzeichnet, dass**
jeweils zwei gegenüberliegende Randbereiche an der Längsseite und der Schmalseite der Platte gebogen werden, um jeweils U - förmige Profile zu bilden.

5. Tisch- oder Plattformwaage mit einer oberen Rahmenkonstruktion (2) und einer unteren Rahmenkonstruktion (3), die über eine Wägezelle (8) miteinander verbunden sind,
**dadurch gekennzeichnet, dass**
mindestens eine, vorzugsweise beide Rahmenkonstruktionen einstückig aus einer monolithischen Platte nach einem Verfahren nach einem der vorhergehenden Ansprüche gefertigt sind.

6. Rahmenkonstruktion für eine Tisch- oder Plattformwaage, insbesondere nach Anspruch 5,
**dadurch gekennzeichnet, dass**
die Rahmenkonstruktion einstückig aus einer monolithischen Platte nach einem Verfahren nach einem der Ansprüche 1 bis 4 gefertigt ist.

7. Tisch- oder Plattformwaage nach Anspruch 5 oder Rahmenkonstruktion nach Anspruch 6, **dadurch gekennzeichnet, dass**
die Rahmenkonstruktion (2,3) eine homogene, teilweise ausgeschnittene oder abgewinkelte Platte ohne stoffschlüssige Verbindungen, insbesondere ohne Schweißnähte aufweist.

8. Tisch- oder Plattformwaage nach einem der Ansprüche 5 oder 7 oder Rahmenkonstruktion nach einem der Ansprüche 6 oder 7,
**dadurch gekennzeichnet, dass**
die Rahmenkonstruktion (2,3) Ausnehmungen (21, 24,25) und/oder abgewinkelte Bereiche (15 bis 20, 22) umfasst, insbesondere Bereiche, die um 90° gegenüber einer Hauptfläche der Platte oder Rahmenkonstruktion abgewinkelt sind.

9. Tisch- oder Plattformwaage nach einem der Ansprüche 5 oder 7 bis 8 oder Rahmenkonstruktion nach einem der Ansprüche 6 oder 7 bis 8,
**dadurch gekennzeichnet, dass**
die Rahmenkonstruktion (2,3) an ihrem äußeren Umfangsrand oder am Rand von Ausnehmungen zumindest teilweise abgewinkelte Bereiche aufweist, die quer, insbesondere senkrecht zur Hauptfläche der Platte angeordnet sind, so dass Kantenwinkel ausgebildet sind.

10. Tisch- oder Plattformwaage nach einem der Ansprüche 5 oder 7 bis 9 oder Rahmenkonstruktion nach einem der Ansprüche 6 oder 7 bis 9,
**dadurch gekennzeichnet, dass**
an gegenüberliegenden Kanten zumindest teilweise abgewinkelte Bereiche angeordnet sind, die sich in derselben Richtung von der Hauptfläche der Platte erstrecken, um U-förmige Profile auszubilden.

11. Tisch- oder Plattformwaage nach einem der Ansprüche 5 oder 7 bis 10 oder Rahmenkonstruktion nach einem der Ansprüche 6 oder 7 bis 10,
**dadurch gekennzeichnet, dass**
die Rahmenkonstruktion (2,3) in der Draufsicht auf die Hauptfläche eine H-Fömrige Form aufweist.

12. Tisch- oder Plattformwaage nach einem der Ansprüche 5 oder 7 bis 11 oder Rahmenkonstruktion nach einem der Ansprüche 6 oder 7 bis 11,
**dadurch gekennzeichnet, dass**
im Krümmungsbereich, der die abgewinkelten Bereiche mit der Hauptfläche verbindet, teilweise Öffnungen vorgesehen sind.

13. Tisch- oder Plattformwaage nach einem der Ansprüche 5 oder 7 bis 12 oder Rahmenkonstruktion nach einem der Ansprüche 6 oder 7 bis 12,
**dadurch gekennzeichnet, dass**
ein oder mehrere Anbauteile (11, 12,13) an der Rahmenkonstruktion (2,3) angeordnet sind.

14. Tisch- oder Plattformwaage nach Anspruch 5 oder 7 bis 13,
**dadurch gekennzeichnet, dass**
die obere und untere Rahmenkonstruktion (2,3) so angeordnet sind, dass die abgewinkelten Bereiche so orientiert sind, dass sie aufeinander zuweisen und/oder sich zumindest teilweise überlappen.

## Claims

1. A method for manufacturing a bench or platform scale including an upper frame construction (2) and a lower frame construction (3) connected to each other via a weighing cell (8), wherein the frame construction is formed by an integral, monolithic plate,
**characterised in that**
the integral, monolithic plate is first cut into its form and provided with cuts to cut free sections at the edges of the outer periphery of the plate, and the sections are then bent so that the frame construction has, in parts, angled sections at its outer circumferential edge.

2. The method according to claim 1,
**characterised in that**
the plate is processed by laser beam cutting and / or in an automated bending machine.

3. The method according to one of the preceding claims,
**characterised in that**
the integral, monolithic plate is provided with recesses and / or openings in its form, and peripheral areas at the edges of the recesses and / or openings are bent.

4. The method according to one of the preceding claims,
**characterised in that**
two opposing peripheral areas on the long side and the narrow side of the plate are bent, respectively, to form U-shaped profiles, respectively.

5. A bench or platform scale including an upper frame construction (2) and a lower frame construction (3) which are connected to each other via a weighing cell (8), **characterised in that**
at least one, preferably both frame constructions are integrally produced from a monolithic plate according to a method according to one of the preceding claims.

6. A frame construction for a bench or platform scale, particularly according to claim 5,
**characterised in that**
the frame construction is integrally produced from a monolithic plate according to a method according to one of the claims I to 4.

7. The bench or platform scale according to claim 5 or the frame construction according to claim 6,
**characterised in that**
the frame construction (2, 3) comprises a homogeneous, partially cut or angled plate without material connections, particularly without weld seams.

8. The bench or platform scale according to one of the claims 5 or 7 or the frame construction according to one of the claims 6 or 7,
**characterised in that**
the frame construction (2, 3) includes recesses (21, 24, 25) and / or bent sections (15 to 20, 22), particularly sections bent by 90° relative to a main surface of the plate or frame construction.

9. The bench or platform scale according to one of the claims 5 or 7 to 8 or the frame construction according to one of the claims 6 or 7 to 8,
**characterised in that**
the frame construction (2, 3) comprises at least partly bent sections which are positioned transverse, particularly perpendicular to the main surface of the plate so that edge angles are formed at its outer circumferential edge or at the periphery of recesses.

10. The bench or platform scale according to one of the claims 5 or 7 to 9 or the frame construction according to one of the claims 6 or 7 to 9,
**characterised in that**
at least partially angled sections extending in the same direction from the main surface of the plate so as to form U-shaped profiles are disposed at opposing edges.

11. The bench or platform scale according to one of the claims 5 or 7 to 10 or the frame construction according to one of the claims 6 or 7 to 10,
**characterised in that**
the frame construction (2, 3) has an H-shaped form in the plan view of the main surface.

12. The bench or platform scale according to one of the claims 5 or 7 to 11 or the frame construction according to one of the claims 6 or 7 to 11,
**characterised in that,**
partially, openings are provided in the curved section connecting the angled sections to the main surface.

13. The bench or platform scale according to one of the claims 5 or 7 to 12 or the frame construction according to one of the claims 6 or 7 to 12,
**characterised in that**
one or more attachment parts (11, 12, 13) are arranged on the frame construction (2, 3).

14. The bench or platform scale according to claim 5 or 7 to 13,
**characterised in that**
the upper and the lower frame construction (2, 3) are arranged so that the angled sections are oriented so that they face each other and / or, at least partly, overlap.

## Revendications

1. Procédé de fabrication d'une balance de table ou de plate-forme avec une ossature supérieure (2) et une ossature inférieure (3) qui sont reliées l'une à l'autre par l'intermédiaire d'une cellule de pesée (8), dans lequel l'ossature est formée par une plaque monolithique monobloc,
**caractérisé en ce que,**
la plaque monolithique monobloc est d'abord découpée à sa forme et est prévue avec des entailles pour dégager des zones en bordure du bord extérieur de la plaque, et les zones sont ensuite repliées de sorte que l'ossature présente des zones partiellement coudées au niveau de son bord périphérique extérieur.

2. Procédé selon la revendication 1,
**caractérisé en ce que,**
la plaque est traitée par découpe au faisceau laser et/ou dans une machine à cintrer automatisée.

3. Procédé selon l'une quelconque des revendications précédentes,
**caractérisé en ce que,**
la plaque monolithique monobloc est prévue à sa forme avec des évidements et/ou ouvertures et des zones périphériques sont repliées en bordure des évidements et/ou des ouvertures.

4. Procédé selon l'une quelconque des revendications précédentes,
**caractérisé en ce que,**
deux zones périphériques respectivement opposées sur le côté longitudinal et le côté étroit de la plaque sont pliées pour former des profilés respectivement en forme de U.

5. Balance de table ou de plate-forme avec une ossature supérieure (2) et une ossature inférieure (3) qui sont reliées l'une à l'autre par l'intermédiaire d'une cellule de pesée (8),
**caractérisée en ce que,**
au moins une ossature, de préférence les deux, sont fabriquées de manière monobloc à partir d'une plaque monolithique selon un procédé selon l'une quelconque des revendications précédentes.

6. Ossature pour une balance de table ou de plate-forme, en particulier selon la revendication 5,
**caractérisée en ce que,**
l'ossature est fabriquée de manière monobloc à partir d'une plaque monolithique par un procédé selon l'une quelconque des revendications 1 à 4.

7. Balance de table ou de plate-forme selon la revendication 5 ou ossature selon la revendication 6,
**caractérisée en ce que,**
l'ossature (2, 3) présente une plaque homogène, partiellement découpée ou coudée, sans connexion par liaison de matière, en particulier sans joint de soudure.

8. Balance de table ou de plate-forme selon l'une quelconque des revendications 5 ou 7 ou ossature selon l'une quelconque des revendications 6 ou 7,
**caractérisée en ce que,**
l'ossature (2, 3) comprend des évidements (21, 24, 25) et/ou des zones coudées (15 à 20, 22), en particulier des zones coudées sur 90° par rapport à une surface principale de la plaque ou de l'ossature.

9. Balance de table ou de plate-forme selon l'une quelconque des revendications 5 ou 7 à 8 ou ossature selon l'une quelconque des revendications 6 ou 7 à 8,
**caractérisée en ce que,**
l'ossature (2, 3) présente, au niveau de son bord périphérique extérieur ou sur le bord d'évidements, des zones au moins partiellement coudées qui sont agencées transversalement, en particulier perpendiculairement, par rapport à la surface principale de la plaque, de sorte que des angles de bord sont formés.

10. Balance de table ou de plate-forme selon l'une quelconque des revendications 5 ou 7 à 9 ou ossature selon l'une quelconque des revendications 6 ou 7 à 9, **caractérisée en ce que,**
des zones au moins partiellement coudées sont agencées à des bordures opposées, qui s'étendent dans la même direction à partir de la surface principale de la plaque pour former des profilés en forme de U.

11. Balance de table ou de plate-forme selon l'une quelconque des revendications 5 ou 7 à 10 ou ossature selon l'une quelconque des revendications 6 ou 7 à 10, **caractérisée en ce que,**
l'ossature (2, 3) présente une forme en H en vue de dessus de la surface principale.

12. Balance de table ou de plate-forme selon l'une quelconque des revendications 5 ou 7 à 11 ou ossature selon l'une quelconque des revendications 6 ou 7 à 11, **caractérisée en ce que,**
des ouvertures partielles sont prévues dans une zone de courbure reliant les zones coudées à la surface principale.

13. Balance de table ou de plate-forme selon l'une quelconque des revendications 5 ou 7 à 12 ou ossature selon l'une quelconque des revendications 6 ou 7 à 12, **caractérisée en ce que,**
un ou plusieurs accessoires (11, 12, 13) sont agencés sur l'ossature (2, 3).

14. Balance de table ou de plate-forme selon la revendication 5 ou 7 à 13, **caractérisée en ce que,**
les ossatures supérieure et inférieure (2, 3) sont agencées de telle sorte que les zones coudées sont orientées de manière à se faire face et/ou à se chevaucher au moins partiellement.
